**Europäisches Patentamt**

**European Patent Office**

**Office européen des brevets**

(19)

(11) **EP 1 577 232 A1**

(12) **EUROPÄISCHE PATENTANMELDUNG**

(43) Veröffentlichungstag:
21.09.2005 Patentblatt 2005/38

(51) Int Cl.⁷: **B65D 90/04**, B65D 90/22,
B63B 43/16, B63B 25/08

(21) Anmeldenummer: 04006474.3

(22) Anmeldetag: 18.03.2004

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL LT LV MK**

(71) Anmelder: **Polisema Group B.V**
**6525 EC Nijmegen (NL)**

(72) Erfinder:
• **Tijink, Freddy Marinus Johannes**
**7573 AZ Oldenzaal (NL)**
• **Abbas, Melchert**
**6844 EG Arnhem (NL)**

• **Stiefelhagen, Ronald**
**3953 BR Maarsbergen (NL)**
• **Dortmans, Johannes Paulus Maria**
**6891 ED Roosendaal (NL)**
• **Scheffer, Michiel Ronald**
**6542 ZW Nijmegen (NL)**
• **Gigot, Manuel Ainué Bruno**
**1030 Bruxelles (BE)**

(74) Vertreter: **Oberlein, Gerriet H. R. et al**
**CPW GmbH**
**Kasinostrasse 19-21**
**42103 Wuppertal (DE)**

(54) **Auskleidung für Tankbehälter**

(57)  Es wird eine Auskleidung für einen Tankbehälter zum Transport oder Lagerung von Medien, insbesondere Kraftstoffen, Mineralölen oder dergleichen vorgeschlagen, wobei die Auskleidung ein hohlraumbildenden Abstandsgewebe umfaßt und zumindest auf der dem Medium zugewandten Oberfläche mit einer gegenüber dem Medium beständigen und gegenüber diesem Medium dichtenden Beschichtung versehen ist, dies sich dadurch auszeichnet, dass sich innerhalb des durch das textile Flächengebilde gebildeten Hohlraums eine oder mehrere funktionelle Komponente(n) befinden, die sich bei einem Kontakt mit dem Medium und/oder Wasser physikalisch und/oder chemisch so verändert bzw. verändern, dass ein weiteres Eindringen des Mediums oder Wasser in den Hohlraum zumindest erschwert wird.

EP 1 577 232 A1

EP 1 577 232 A1

**Beschreibung**

Die vorliegende Erfindung betrifft eine Auskleidung für einen Tankbehälter zum Transport oder Lagerung von Medien, insbesondere Kraftstoffen, Mineralölen oder dergleichen, wobei die Auskleidung ein hohlraumbildendes textiles Flächengebilde umfasst und zumindest auf der dem Medium zugewandten Oberfläche mit einer gegenüber dem Medium beständigen und gegenüber diesem Medium dichtenden Beschichtung (Coating) versehen ist.

Eine solche Auskleidung ist aus der DE-A-101 44 149 bekannt. Diese Offenlegungsschrift beschreibt eine Leckschutzeinrichtung für Tankbehälter, die im wesentlichen aus einem hohlraumbildenden textilen Flächengebilde, einer medienbeständigen Folie und aus einer Laminatschicht besteht.

Im Falle eines Leckes des sich innerhalb des Tankbehälters befindlichen Mediums, dringt das Medium zunächst in den durch das textile Flächengebilde gebildeten Hohlraum, worin sich z.B. ein Unterdruck-Leckanzeigegerät befindet, das im Falle eines Leckes Alarm gibt, damit Gegenmaßnahmen eingeleitet werden können.

Das textile Flächengebilde der DE-A-101 44 149 ist ein starres Gebilde, das z.B. aus einem mit Kunstharz getränkten Glasfasergewebe besteht, welches auf die Bodenwand des Tankbehälters laminiert ist.

Eine solche Leckschutzvorrichtung ist insbesondere geeignet für freistehende Tankbehälter oder auch für ins Erdreich eingebaute Tankbehälter.

Die aus der DE-A-101 44 149 bekannte Auskleidung ist für die rechtzeitige Detektion von Leckagen geeignet, insbesondere auch kleiner Lecks, die ggf. längere Zeit unbemerkt bleiben und dadurch ganz erhebliche Schädigungen des umgebenden Milieus verursachen können.

Mit der immer mehr zunehmenden Mobilisierung sowie der ständig steigenden Produktivität auf Basis von fossilen Rohstoffen, nimmt auch die Notwendigkeit zu, diese Medien schnell und in großer Menge an die Bedarfsorte zu transportieren. Aufgrund der Tatsache, dass die Stellen, an denen z.B. fossile Rohstoffe, wie Öl oder Gas, vorkommen, in der Regel weit ab von den Plätzen liegen, an denen sie verwendet und benötigt werden, sind oft sehr lange Transportwege unvermeidlich. Handelt es sich bei dem Medium z.B. um Rohöl, so werden die Wege zwischen den Orten der Gewinnung bzw. Förderung und denen des Einsatzes in der Regel durch Öltransportschiffe bzw. Öltanker durchgeführt.

Da große Mengen derartiger Medien über große Strecken in verhältnismäßig kurzer Zeit zu befördern sind, kommt es immer wieder zu Gefahrensituationen durch Unfälle, wie z.B. Kollisionen. Derartige Kollisionen können die Tankbehälter so stark beschädigen, dass große Mengen ihres Inhalts ausströmen und dadurch unermeßlichen Schaden anrichten können. Ein Beispiel aus der jüngeren Vergangenheit ist das Auslaufen der Ölladung aus dem Tanker Exxon Valdez, durch die im Jahre 1989 im Prince William Sound in Alaska eine Verschmutzung von nie dagewesenem Ausmaß verursacht wurde.

Durch diese Katastrophe bedingt wurde 1990 in den Vereinigten Staaten der sogenannte "Oil Pollution Act" (OPA) beschlossen, der bei Neubauten von Öltankern den Einbau einer zweite Hülle vorschreibt. Neue Tankschiffe fahren daher mit einer doppelten Stahlhülle. Dies Maßnahme führt jedoch dazu, dass die Tanker ein größeres Gewicht bei entsprechend kleinerem Laderaum aufweisen. Darüber hinaus besteht auch immer noch ein Risiko, dass ebenfalls die weitere Stahlhülle bei einer Kollision zerstört wird. Außerdem sind von den Forderungen des OPA nicht die existierenden Öltanker betroffen. Schließlich bezieht sich das Gesetz auf Öltanker und erfasst nicht (bewegte) Tankbehälter anderer Kategorie, wie z.B. die schienen- und/oder straßengebundenen Tankbehältnisse.

Weitere Richtlinien und Gesetzesinitiativen in dieser Richtung sind beispielsweise die IMO (International Marine Organization) Guideline, die ebenfalls besagt, dass neue Schiffe seit 1996 nur mit einer Doppelhülle gebaut werden sollen, sowie eine Richtlinie der Europäischen Union, nach der in einer Übergangsphase zwischen 2005 und 2015 alle Tankschiffe mit nur einer Hülle ausgesondert werden sollen.

Die Lösung, die durch die DE-A-101 44 149 vorgeschlagen wird, ist nur bedingt geeignet in Fällen, bei denen Medien in beweglichen Tankbehältern transportiert werden und im Zuge dieser Bewegung eventuell Kollisionen oder sonstige Unfälle erleiden können. Dieses ist hauptsächlich darin begründet, dass der Gegenstand der DE-A-101 44 149 lediglich als "Leckwarnung" fungiert, wobei der Einsatz insbesondere bei kleinen, möglicherweise andererseits unbemerkten, Leckagen bevorzugt ist.

Eine einfache Auskleidung, die sich in Form einer das Medium enthaltenen Blase in den Innenraum eines Öltankers legen lässt, ist in der US 4,230,061 beschrieben. Diese Innenlage ist leicht zu entfernen und besteht aus einer Kunststoffhülle, die mit einem Coating überzogen ist, wodurch sie flüssigkeits- bzw. gasundurchlässig wird. Im Falle einer Leckage der Außenhülle kann jedoch relativleicht auch diese Innenhülle beschädigt werden, wodurch es zu einem Austritt des Mediums kommen kann.

Es besteht also nach wie vor Bedarf an Auskleidungen, insbesondere für große und bewegte Tankbehälter, wie sie beispielsweise in Form von Öltankern realisiert sind, die dafür sorgen, dass Leckagen durch Kollisionen oder dergleichen keine so gravierenden Folgen haben, wie es sich in der Vergangenheit bei diversen Tankerunglücken gezeigt hat. Gleichzeitig sollen diese Auskleidungen möglichst einfach einzubringen sein, so dass sie nicht nur bei Neubauten von Tankbehältern einsetzbar sind, sondern auch der Nachrüstung bestehender Behältnisse dienen können. Außerdem soll die Auskleidung gewichtssparend sein, damit der Verlust an Ladekapazität möglichst gering bleibt.

Die Lösung dieser Aufgabe gelingt in überraschender Weise durch eine Auskleidung wie im Eingangsabsatz beschrieben, die sich dadurch auszeichnet, dass sich innerhalb des durch das textile Flächengebilde gebildeten Hohlraums eine oder mehrere funktionelle Komponente(n) befinden, die sich bei einem Kontakt mit dem Medium und/oder Wasser physikalisch und/oder chemisch so verändert bzw. verändern, dass ein weiteres Eindringen des Mediums oder Wasser in den Hohlraum zumindest erschwert wird.

Erfindungsgemäß ist es besonders bevorzugt, wenn die eine oder mehreren funktionelle(n) Komponente(n) so gewählt wird bzw. werden, dass sie bei dem Kontakt mit dem Medium oder Wasser eine Vergrößerung ihres Volumens erfährt bzw. erfahren.

Mittels der erfindungsgemäßen Auskleidung ist es möglich, im Fall von Leckagen nicht nur dafür zu sorgen, dass möglichst wenig des zu transportierenden Mediums in die Umwelt gerät, indem es durch die funktionelle(n) Komponente(n) aufgesogen wird. Darüber hinaus kommt es durch das Aufquellen dieser funktionellen Komponente(n) auch zu einer Abdichtung des Lecks, infolge der Volumenvergrößerung oder auch Verhärtung der funktionellen Komponente(n), die wie eine Art "Pfropfen" auf die Leckage wirkt.

Die Struktur des für die erfindungsgemäße Auskleidung eingesetzten textilen Flächengebildes ist prinzipiell keinen Beschränkungen unterworfen und kann beispielsweise in Form von an sich üblichen textilen Flächengebilden ausgebildet sein, unabhängig von ihrer Herstellungsart, wie z.B. Gewebe, Gewirke, Gestricke, getuftete Ware, Nadelwaren, Geflechte, Vliesstoffe oder auch Filze.

Bevorzugt besteht das hohlraumbildende textile Flächengebilde der Auskleidung gemäß vorliegender Erfindung jedoch aus einer oberen und einer unteren Gewebeschicht, wobei die obere mit der unteren Gewebeschicht durch Stegfäden verbunden ist. Derartige Konstruktionen sind dem Fachmann als Abstandsgewebe geläufig. Die Bindungsart des dabei einzusetzenden Gewebes ist prinzipiell nicht entscheidend, es sollte jedoch dafür gesorgt werden, dass die Stegfäden jeweils eine Art Verlängerung der Gewebeschichten darstellen, d.h. die obere und untere Gewebeschicht gemeinsam erzeugt werden.

Der durch das Flächengebilde gebildete Hohlraum sollte so dimensioniert sein, dass er einen Abstand zwischen den ihn begrenzenden Schichten, beispielsweise einer oberen und einer unteren Gewebeschicht, von ca. 2 m aufweist. Diese Weite ist in aller Regel ausreichend, um eine solche Menge an funktionellen Komponenten aufzunehmen, die es gestattet, im Falle einer Leckage gegen das große Volumen an eindringendem Wasser oder Medium anzuwirken.

Selbstverständlich ist es möglich und bisweilen auch erwünscht, wenn zwischen den den Hohlraum begrenzenden Schichten noch weitere Schichten aus textilem Flächengebilde, die vorzugsweise ebenfalls gecoated sind, eingezogen sind.

Im Fall des bevorzugten Abstandsgewebes beispielsweise können zwischen der unteren und der oberen Gewebeschicht noch weitere (ein oder auch mehrere) Schichten der gleichen Art oder auch andere textile Flächengebilde eingezogen sein. Diese zusätzlichen Schichten aus textilen Flächengebilden können sowohl parallel zu der oberen und der unteren Gewebeschicht liegen - und sind dann über die Stegfäden untereinander und mit der oberen und der unteren Gewebeschicht verbunden - als auch von der oberen zur unteren Gewebeschicht reichen. Dieses Einziehen von weiteren textilen Flächengebilden kann, bevorzugt in Form von weiteren Gewebeschichten, kann - wie bereits erwähnt - wiederholt durchgeführt werden und somit entstehen beispielsweise Auskleidungen aus Abstandsgeweben, die ihrerseits durchzogen sind von einer oder mehreren weiteren Gewebeschichten. Diese weiteren Gewebeschichten können sich selbstverständlich auch kreuzen, so dass weitere (kleinere) Hohlräume bzw. Kompartimente gebildet werden, die dafür sorgen, dass zum einen die funktionelle(n) Komponenten lokal besser fixiert wird bzw. werden, als auch verhindern, dass sich eindringendes Medium oder Wasser gleich innerhalb des gesamten Hohlraumes ausbreiten kann. Darüber hinaus wird ein weiträumiges Einreißen durch das Vorhandensein solcher Kompartimente unterbunden. Weiterhin ist es möglich, auch einzelnen dieser gebildeten Kompartimente mit jeweils unterschiedlichen funktionellen Komponenten zu füllen.

Das gesamte hohlraumbildende textile Flächengebilde kann so dimensioniert sein, dass es die Tankwände gerade bedeckt. In einer bevorzugten Ausführungsform ist es jedoch so groß, dass es mehr oder weniger große Faltungen aufwirft, wenn an der Tankwand befestigt. Dadurch wird gewährleistet, dass im Falle eines Einbruchs von Wasser oder Medium eine noch größere Menge davon durch den gebildeten Hohlraum aufgenommen werden kann.

Bevorzugt besteht das hohlraumbildende textile Flächengebilde aus einem synthetischen Polymeren, gewählt aus der Gruppe umfassend Polyolefin, Polyester, Polyamid und/oder Mischungen und Kombinationen dieser Polymere miteinander. Ganz besonders bevorzugt wird, wenn das hohlraumbildende textile Flächengebilde im wesentlichen aus Polyethylenterephthalat besteht.

In einer besonderen Ausführungsform besteht das hohlraumbildende textile Flächengebilde im wesentlichen aus zwei polymeren Bestandteilen mit unterschiedlichem Schmelzpunkt, wobei der niedriger schmelzende Bestandteil wenigstens teilweise die Oberfläche des höherschmelzenden Bestandteiles bildet. Solche Verbindungen sind dem Fachmann unter dem Begriff Bikomponentenstrukturen oder Biko-Verbindungen bekannt.

Es ist weiterhin bevorzugt, dass die beiden polymeren Bestandteile in Form einer Kern-Mantel-Struktur vorliegen, wobei der den Mantel bildende polymere Bestandteil einen niedrigeren Schmelzpunkt aufweist als der den Kern bildende polymere Bestandteil.

Als besonders günstig hat sich dabei erwiesen, wenn der höherschmelzende Bestandteil im wesentlichen aus Polyethylenterephthalat besteht.

Die funktionelle(n) Komponente(n) besteht bzw. bestehen (im folgenden soll mit dem Begriff "Komponente" die Einzahl als auch die Mehrzahl gemeint sein) bevorzugt aus Materialien, die in der Lage sind, das Medium und/oder das Wasser, mit dem sie in Kontakt kommen, ganz oder teilweise zu adsorbieren und/oder zu absorbieren. Unter Adsorption soll hier die Aufnahme von Molekülen auf der Oberfläche der funktionellen Komponente gemäß ASTM-F726 verstanden werden, mit Absorption ist dagegen gemäß ASTM-F716 die Aufnahme der Moleküle innerhalb des Körpers der funktionellen Schicht zu verstehen.

Sowohl die Adsorption als auch die Absorption können von chemischen Reaktionen zwichen der funktionellen Komponente und dem Medium bzw. Wasser begleitet sein.

Materialien, die die Fähigkeit aufweisen, andere-Moleküle zu adsorbieren und/oder zu absorbieren sind an sich bekannt. Als günstig haben sich z.B. quellbare und/oder oberflächenreiche Materialien erwiesen, wie z.B. auf Basis von Polyolefin, insbesondere Polypropylen, Polystyrol, Wolle, Cellulose, Stärke oder mineralischen Produkten. Besonders bevorzugt als funktionelle Komponenten sind sogenannte Imbiber Beads® hergestellt von Imbibitive Technologies Corporation, USA. Imbiber Beads® sind Materialien, die als funktionelle Komponenten innerhalb der erfindungsgemäßen Auskleidung eingesetzt bis zu 27 mal ihr eigenes Volumen an Medium und/oder Wasser durch Absorption aufnehmen können.

In einer weiteren bevorzugten Ausführungsform ist die funktionelle Komponente selbst in Form eines textilen Flächengebildes ausgelegt. Dieses kann beispielsweise erreicht werden, indem ein Gewebe mit einer funktionellen Komponente ausgerüstet wird, wie z.B. durch Schlichten von Polyethylenterephthalat-Geweben mittels Stärke oder dergleichen.

Es kann vorteilhaft sein, wenn die eine oder mehreren funktionelle(n) Komponente(n) zumindest teilweise mit dem hohlraumbildenden textilen Flächengebilde fest verbunden ist bzw. sind. Dies führt zu einer guten Dimensionsstabilität der Auskleidung insgesamt und erleichtert auch ihren Ein- und ggf. Ausbau.

Ebenfalls bevorzugt wird es, wenn die funktionelle Komponente so ausgewählt wird, dass es zu einer guten Steifheit des hohlraumbildenden Abstandsgewebes kommt.

Für die Beschichtung, also das Coaten des hohlraumbildendes textilen Flächengebildes, wird bevorzugt eine im wesentlichen aus einem fluorcarbonhaltigen Material, wie Polytetrafluorethylen, bestehende Verbindung eingesetzt.

Es entsteht somit also eine Auskleidung, die aus einem Komposit besteht, wobei das Komposit die Kombination aus dem-hohlraumbildenden Abstandsgewebe und

der Beschichtung ist.

Bevorzugt wird es, wenn diese Beschichtung ölabweisend ausgelegt ist, damit beispielsweise notwendige Reinigungsarbeiten erleichtert werden.

Ebenfalls bevorzugt wird es, wenn diese Beschichtung zusätzlich flammhemmend ausgelegt ist.

Die Beschichtung erfolgt vorzugsweise auf beiden Seiten des hohlraumbildenden textilen Flächengebildes, also sowohl auf der dem Medium zugewandten Seite als auch auf der der Tankwand zugewandten Seite.

Selbstverständlich ist es auch möglich und mitunter sogar bevorzugt, wenn auch die Innenseite des hohlraumbildenden textilen Flächengebildes gecoated ist. Diese Maßnahme bringt unter anderem eine zusätzliche Verstärkung der Auskleidung mit sich.

Dieses Coaten bzw. Beschichten der Innenseite kann sich auch auf die zusätzlichen eingeführten weiteren textilen Flächengebilde und/oder die Stegfäden erstrecken.

Die erfindungsgemäßen Auskleidungen sind besonders gut geeignet für solche Tankbehältern, wie sie die Innenräume von seegängigen Öltransportschiffen darstellen.

Weiterhin bevorzugt wird es, wenn die Auskleidung für Tankbehältern verwendet werden, die in straßen- oder schienengebundene Öltransportbehältnisse eingesetzt werden.

**Patentansprüche**

**1.** Auskleidung für einen Tankbehälter zum Transport oder Lagerung von Medien, insbesondere Kraftstoffen, Mineralölen oder dergleichen, wobei die Auskleidung ein hohlraumbildenden textiles Flächengebilde umfasst und zumindest auf der dem Medium zugewandten Oberfläche mit einer gegenüber dem Medium beständigen und gegenüber diesem Medium dichtenden Beschichtung versehen ist, **dadurch gekennzeichnet, dass** sich innerhalb des durch das textile Flächengebilde gebildeten Hohlraums eine oder mehrere funktionelle Komponente(n) befinden, die sich bei einem Kontakt mit dem Medium und/oder Wasser physikalisch und/oder chemisch so verändert bzw. verändern, dass ein weiteres Eindringen des Mediums oder Wasser in den Hohlraum zumindest erschwert wird.

**2.** Die Auskleidung nach Anspruch 1, **dadurch** charakterisiert, dass die eine oder mehreren funktionelle(n) Komponente(n) so gewählt wird bzw. werden, dass sie bei dem Kontakt mit dem Medium oder Wasser eine Vergrößerung ihres Volumens erfährt bzw. erfahren.

**3.** Die Auskleidung gemäß Anspruch 1 oder 2, **dadurch gekennzeichnet, dass** das hohlraumbildende textile Flächengebilde aus einer oberen und einer unteren Gewebeschicht besteht, wobei die obere mit der unteren Gewebeschicht durch Stegfäden verbunden ist.

**4.** Die Auskleidung nach Anspruch 3, **dadurch gekennzeichnet, dass** zwischen der unteren und der oberen Gewebeschicht noch weitere textile Flächengebilde, bevorzugt in Form von Gewebeschichten, eingezogen sind.

**5.** Die Auskleidung nach einem oder mehreren der vorausgehenden Ansprüche 1 bis 4, **dadurch gekennzeichnet, dass** das hohlraumbildende textile Flächengebilde im wesentlichen aus einem synthetischen Polymeren hergestellt ist, der gewählt ist aus der Gruppe umfassend Polyolefin, Polyester, Polyamid und/oder Mischungen und Kombinationen dieser Polymere miteinander.

**6.** Die Auskleidung nach Anspruch 5, **dadurch gekennzeichnet, dass** das hohlraumbildende textile Flächengebilde im wesentlichen aus Polyethylenterephthalat besteht.

**7.** Die Auskleidung nach Anspruch 5 oder 6, **dadurch gekennzeichnet, dass** das hohlraumbildende textile Flächengebilde im wesentlichen aus zwei polymeren Bestandteilen mit unterschiedlichen Schmelzpunkten besteht, wobei der niedriger schmelzende Bestandteil wenigstens teilweise die Oberfläche des höherschmelzenden Bestandteils bildet.

**8.** Die Auskleidung nach Anspruch 7, **dadurch gekennzeichnet, dass** die beiden polyrrieren Bestandteile in form einer Kern-Mantel-Struktur vorliegen, wobeider den Mantel bildende polymere Bestandteil einen niedrigeren Schmelzpunkt aufweist als der den Kern bildende polymere Bestandteil.

**9.** Die Auskleidung nach Anspruch 7 oder 8, **dadurch gekennzeichnet, dass** der höherschmelzende polymere Bestandteil im wesentlichen aus Polyethylenterephthalat besteht.

**10.** Die Auskleidung nach einem oder mehreren der vorausgehenden Ansprüche 1 bis 9, **dadurch gekennzeichnet, dass** die eine oder mehreren funktionelle(n) Komponente(n) im wesentlichen aus einem Material oder aus Materialien bestehen, das oder die in der Lage sind, das Medium und/oder das Wasser, mit dem sie in Kontakt kommen, ganz oder teilweise zu adsorbieren und/oder zu absorbieren.

**11.** Die Auskleidung nach einem oder mehreren der vorausgehenden Ansprüche 1 bis 10, **dadurch gekennzeichnet, dass** die eine oder mehreren funktionelle(n) Komponente(n) ebenfalls in Form eines textilen Flächengebildes ausgebildet ist bzw. sind.

**12.** Die Auskleidung nach einem oder mehreren der vorausgehenden Ansprüche 1 bis 11, **dadurch gekennzeichnet, dass** die eine oder mehreren funktionelle(n) Komponente(n) zumindest teilweise mit dem hohlraumbildenden textilen Flächengebilde fest verbunden ist bzw. sind.

**13.** Die Auskleidung nach einem oder mehreren der vorausgehenden Ansprüche 1 bis 12, **dadurch gekennzeichnet, dass** die Beschichtung im wesentlichen aus einem fluorcarbonhaltigen Material, wie Polytetrafluorethylen, besteht.

**14.** Die Auskleidung nach einem oder mehreren der vorausgehenden Ansprüche 1 bis 13, **dadurch gekennzeichnet, dass** es sich bei den Tankbehältern um die Innenräume von seegängigen Öltransportschiffen handelt.

**15.** Die Auskleidung nach einem oder mehreren der vorausgehenden Ansprüche 1 bis 13, **dadurch gekennzeichnet, dass** es sich bei den Tankbehältern um straßen- oder schienengebundene Öltransportbehältnisse handelt.

**Europäisches Patentamt**

**EUROPÄISCHER RECHERCHENBERICHT**

Nummer der Anmeldung

EP 04 00 6474

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | DE 101 44 149 A (LM TANKSCHUTZ GMBH) 27. März 2003 (2003-03-27) * das ganze Dokument * ----- | 1 | B65D90/04 B65D90/22 B63B43/16 B63B25/08 |
| A | US 2004/044126 A1 (K.ROHM) 4. März 2004 (2004-03-04) * das ganze Dokument * ----- | 1 | |
| A | US 3 801 425 A (COOK R) 2. April 1974 (1974-04-02) * das ganze Dokument * ----- | 1 | |

RECHERCHIERTE SACHGEBIETE (Int.Cl.7)

B65D
B63B
B60P
B64D

Der vorliegende Recherchenbericht wurde für alle Patentansprüche erstellt

| Recherchenort | Abschlußdatum der Recherche | Prüfer |
|---|---|---|
| Den Haag | 28. September 2004 | Zanghi, A |

**ANHANG ZUM EUROPÄISCHEN RECHERCHENBERICHT**
**ÜBER DIE EUROPÄISCHE PATENTANMELDUNG NR.**                  EP 04 00 6474

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-09-2004

| Im Recherchenbericht angeführtes Patentdokument | | Datum der Veröffentlichung | Mitglied(er) der Patentfamilie | | Datum der Veröffentlichung |
|---|---|---|---|---|---|
| DE 10144149 | A | 27-03-2003 | DE | 10144149 A1 | 27-03-2003 |
| US 2004044126 | A1 | 04-03-2004 | DE | 10048548 A1 | 18-04-2002 |
| | | | DE | 10050482 A1 | 04-04-2002 |
| | | | DE | 20021744 U1 | 12-04-2001 |
| | | | WO | 0210039 A1 | 07-02-2002 |
| | | | EP | 1305237 A1 | 02-05-2003 |
| | | | EP | 1193364 A2 | 03-04-2002 |
| | | | WO | 0236053 A2 | 10-05-2002 |
| | | | EP | 1404267 A2 | 07-04-2004 |
| | | | US | 2004063801 A1 | 01-04-2004 |
| US 3801425 | A | 02-04-1974 | KEINE | | |

EPO FORM P0461

Für nähere Einzelheiten zu diesem Anhang : siehe Amtsblatt des Europäischen Patentamts, Nr.12/82